# EUROPEAN PATENT APPLICATION

(11) **EP 4 593 107 A1**
(43) Date of publication of application: **30.07.2025**
(21) Application number: 24194416.4
(22) Date of filing: 13.08.2024
(51) Int. Cl.: H01M 4/133, H01M 4/134, H01M 4/1395, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 25.01.2024 KR 20240011821
(71) Applicant: SAMSUNG SDI CO., LTD., Giheung-gu Yongin-si, Gyeonggi-do 17084 (KR)
(72) Inventor: DO, Uisong, 17084 Yongin-si, Gyeonggi-do (KR)
(74) Representative: Michalski Hüttermann & Partner Patentanwälte mbB

(57) **Abstract**

A negative electrode for a rechargeable lithium battery and a rechargeable lithium battery are provided. The negative electrode includes a current collector, and a negative electrode active material layer including a negative electrode active material and a polymer whose volume or length is reduced at a set or predetermined temperature.

## Description

### BACKGROUND

### 1. Field

According to one or more embodiments, the present disclosure relates to a negative electrode for a rechargeable lithium battery and a rechargeable lithium battery including the negative electrode.

### 2. Description of the Related Art

Recently, the rapid increases of utilizations of electronic devices such as mobile phones, laptop computers, electric vehicles and/or the like, using batteries results in surprisingly large increases in demand or desire for rechargeable batteries with relatively high energy density and high capacity. Therefore, intensive research for improving the performance of rechargeable lithium batteries has been actively studied or pursued.

A rechargeable lithium battery includes a positive electrode and a negative electrode, each of which include an active material capable of intercalating and deintercalating lithium ions. The rechargeable lithium battery also includes an electrolyte and generates electrical energy due to the oxidation and reduction reaction that occurs if (e.g., when) lithium ions are intercalated in to and deintercalated out of the positive electrode and the negative electrode, respectively.

### SUMMARY

One or more aspects are directed toward a negative electrode for a rechargeable lithium battery exhibiting excellent or desire fast charge characteristic.

One or more aspects are directed toward a rechargeable lithium battery including the negative electrode.

Additional aspects will be set forth in part in the description which follows and, in part, will be apparent from the description, or may be learned by practice of the presented embodiments of the disclosure.

One or more embodiments provide a negative electrode for a rechargeable lithium battery including:
a current collector; and
a negative electrode active material layer on the current collector, and including a polymer whose volume or length is reduced (i.e., the polymer having a volume or a length configured to decrease) at a set or predetermined temperature; and
a negative electrode active material.

Another embodiment provides a rechargeable lithium battery including the negative electrode; a positive electrode; and an electrolyte.

A negative electrode according to one or more embodiments may exhibit excellent or desire fast or rapid charge characteristics.

### BRIEF DESCRIPTION OF THE DRAWINGS

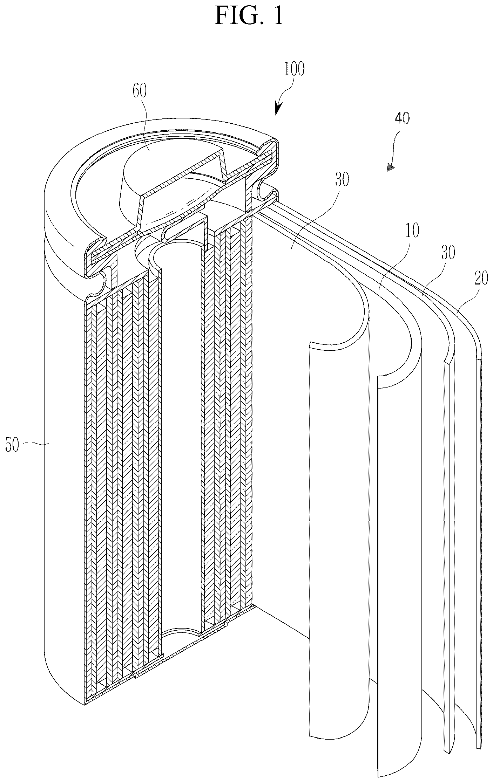

FIGs. 1-4 are schematic views each illustrating a rechargeable lithium battery according to one or more embodiments.

### DETAILED DESCRIPTION

Hereinafter, embodiments are described in more detail. However, these embodiments are merely examples, the present disclosure is not limited thereto and the present disclosure is defined by the scope of the claims.

As used herein, if (e.g., when) a definition is not otherwise provided, it will be understood that if (e.g., when) an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B".

As used herein, the term "combination thereof may include a mixture, a laminate, a complex, a copolymer, an alloy, a blend, a reactant of constituents.

As used herein, if (e.g., when) a definition is not otherwise provided, a particle diameter may be an average particle diameter. Such a particle diameter indicates an average particle diameter (D50) where a cumulative volume is about 50 volume% in a particle size distribution. The average particle diameter (D50) may be measured by a method well suitable to those skilled in the art, for example, by a particle size analyzer, or by a transmission electron microscopic image, or a scanning electron microscopic image. In one or more embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50 % standard of particle distribution in the measuring device.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

### Negative Electrode

A negative electrode for a rechargeable lithium battery according to one or more embodiments includes a current collector; and a negative electrode active material layer including a polymer whose volume or length is reduced (i.e., the polymer having a volume or a length configured to decrease) at a set or predetermined temperature; and a negative electrode active material.

The polymer may have a physical property of reducing a volume or a length at a set or predetermined temperature, for example, about 120 °C to about 200 °C. For example, the polymer reduces its volume or length at the set or predetermined temperature, thus enabling the formation of spaces in the negative electrode active material of the final negative electrode. For example, during the vacuum drying after the negative electrode active material layer composition including the polymer is coated on the current collector, dried, and pressurized, the volume and/or the length may be reduced, making some regions occupied by the polymer in the negative electrode active material layer become empty spaces, so that the spaces may be presented in the final negative electrode active material layer. In some embodiments, if the vacuum drying is carried out at the set or predetermined temperature, the polymer may be partially removed, thereby reducing the volume and/or the length.

Lithium ions may be passed through such empty spaces which may serve as a passage for lithium ions, thereby improving fast or rapid charge characteristics.

The set or predetermined temperature at which the volume or the length of the polymer is reduced may be about 120 °C to about 200 °C, about 120 °C to about 180 °C, or about 120 °C to about 160 °C.

The polymer according to one or more embodiments may have a reduction rate represented by Equation 1 of about 70 % to about 99 %, about 80 % to about 99 %, or about 90 % to about 99 %, which is a ratio of reduction in volume (e.g., of the polymer) at about 120 °C to about 200 °C relative to a volume at a room temperature.

In the specification, the room temperature may be about 20 °C to about 25 °C. Reduction rate in volume (%) = [(volume at room tempreature-volume at about 120°C to about 200°C)/volume at room temperature]*100

The polymer according to one or more embodiments may have a reduction rate represented by Equation 2 of about 70 % to about 99 %, about 80 % to about 99 %, or about 90 % to about 99 %, which is a ratio of reduction in length (e.g., of the polymer) at about 120 °C to about 200 °C relative to a length at a room temperature. Reduction rate in length (%) = [(length at room temperature-length at about 120°C to about 200°C)/length at room temperature]*100

The polymer according to one or more embodiments is not affected by heat-treating at a temperature of about 100 °C or less, and may be partially combusted at a temperature exceeding about 100 °C, for example, about 120 °C or more, for at least some the polymer to be removed. The partial removal of the polymer may cause a reduction in volume and/or length at the temperature as described herein.

In one or more embodiments, the polymer may have a shape such as a wire type or kind (chain type or kind), a twig-type or kind, a branch-type or kind, a, nonwoven fabric type or kind, and/or the like.

A porosity of the negative electrode active material layer according to one or more embodiments may be about 20 % to about 30 %, or about 25 % to about 30 %. If (e.g., when) the porosity of the negative electrode active material layer is within the described ranges, the transfer of the lithium ions may be more facilitated, thereby more improving fast or rapid charge characteristics. If (e.g., when) the negative electrode active material layer has the porosity within the described ranges and includes the polymer whose volume and/or length is reduced at the set or predetermined temperature, the resistance may be further reduced, the cycle-life characteristics may be further improved, and the fast or rapid charge characteristics may be further improved.

The polymer may be polyvinyl chloride.

In one or more embodiments, an amount of the polymer may be, based on 100 wt% of the negative electrode active material layer, about 0.1 wt% to about 1.0 wt%, or about 0.5 wt% to about 1.0 wt%. If (e.g., when) the amount of the polymer is within the described ranges, the capacity of the battery may be increased.

In some embodiments, a weight ratio of the negative electrode active material and the polymer may be about 99.9:0.1 to about 99.0:1.0 by weight ratio or about 99.5:0.5 to about 99.0: 1.0 by weight ratio. If (e.g., when) the weight ratio of the negative electrode active material and the polymer is included in the described ranges, the dispersion of the polymer may be improved or enhanced.

The negative electrode active material may include a carbon-based negative electrode active material, a Si-based negative electrode active material, and/or a (e.g., any suitable) combination thereof.

The carbon-based negative electrode active material may include crystalline carbon, amorphous carbon, and/or a (e.g., any suitable) combination thereof. The crystalline carbon may be graphite such as unspecified shaped, sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and/or the like.

The Si-based negative electrode active material may include silicon, a silicon-carbon composite, SiOₓ (0 < x ≤ 2), a Si-Q alloy, where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof.

The silicon-carbon composite may be a composite of silicon and amorphous carbon. According to one or more embodiments, the silicon-carbon composite may be in a form of silicon particles (e.g., primary silicon particles), and amorphous carbon coated on the surface of the silicon particles (e.g., primary silicon particles). For example, the silicon-carbon composite may include a secondary particle (core) in which the primary silicon particles are agglomerated, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles (e.g., primary silicon particles), and an amorphous carbon coating layer on a surface of the core.

The silicon particles (e.g., primary silicon particles), may be silicon nano particles.

A particle diameter of the silicon nano particles may be about 10 nanometer (nm) to about 1,000 nm, and in one or more embodiments, may be about 10 nm to about 200 nm, or about 20 nm to about 150 nm. If (e.g., when) the average particle diameter of the silicon nano particles is within the described ranges, (e.g., extreme) volume expansion caused during charge and discharge may be suppressed or reduced, and a breakage of the conductive path due to crushing of the particles may be prevented or reduced.

In the negative electrode active material according to one or more embodiments, the silicon-carbon composite as utilized as the core may include silicon nano particles and an amorphous carbon coating layer on the surface of the silicon nano particles. The silicon-carbon composite may include an agglomerated product (e.g., a secondary particle) where at least one silicon nano particle(s) are agglomerated and an amorphous carbon coating layer on the surface of the agglomerated product (e.g., a secondary particle).

In the amorphous carbon coating layer, the amorphous carbon may be a soft carbon, a hard carbon, a mesophase pitch carbonization product, calcined coke, and/or the like. A thickness of the amorphous carbon coating layer may be about 1 nm to about 2 µm, about 1 nm to about 500 nm, about 10 nm to about 300 nm, or about 20 nm to about 200 nm. If (e.g., when) the thickness of the amorphous carbon coating layer is within the described ranges, volume expansion of silicon during charge and discharge may be effectively suppressed or reduced.

The crystalline carbon may be graphite such as non-shaped, sheet-shaped, flake-shaped, sphere-shaped, or fiber-shaped natural graphite or artificial graphite.

If (e.g., when) the silicon-carbon composite includes silicon nano particles and the amorphous carbon coating layer, based on the total 100 wt% of the silicon-carbon composite, an amount of the silicon nano particle may be about 30 wt% to about 70 wt%, or about 40 wt% to about 65 wt%. An amount of the amorphous carbon coating layer may be, based on the total 100 wt% of the silicon-carbon composite, about 30 wt% to about 70 wt%, or about 35 wt% to about 60 wt%.

If (e.g., when) the silicon-carbon composite further includes crystalline carbon, based on the total 100 wt% of the silicon-carbon composite, an amount of the silicon nano particles may be about 20 wt% to about 70 wt% or about 25 wt% to about 65 wt%. Based on the total 100 wt% of the silicon-carbon composite, an amount of the amorphous carbon may be about 25 wt% to about 70 wt% or about 25 wt% to about 60 wt% and an amount of the crystalline carbon may be about 1 wt% to about 20 wt% or about 5 wt% to about 15 wt%.

In the negative electrode active material layer, an amount of the negative electrode active material may be, based on the total 100 wt% of the negative electrode active material layer, about 95 wt% to about 98 wt%.

The negative electrode active material layer may include a binder and may further include a conductive material. An amount of the binder may be, based on the total 100 wt% of the negative electrode active material layer, about 1 wt% to about 4 wt%. An amount of the conductive material may be, based on the total 100 wt% of the negative electrode active material layer, about 0.05 wt% to about 1.0 wt%.

The binder may serve to attach the negative electrode active material particles well to each other and also to attach the negative electrode active material well to the current collector. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

The negative electrode binder may be a cellulose-based compound and in one or more embodiments, the cellulose-based compound may be used together with the aqueous binder. The cellulose-based compound may include one or more of carboxymethyl cellulose, hydroxypropylmethyl cellulose, methyl cellulose, or alkali metal salts thereof. The alkali metal may be Na, K, or Li. The cellulose-based compound may serve as a binder and may serve as a thickener for imparting viscosity. The cellulose-based compound may be used in a suitable amount in the amount of the binder, but for example, may be used in an amount of about 0.1 parts by weight to 3 parts by weight based on 100 parts by weight of the negative electrode active material.

The dry binder may be a polymer material that is capable of being fibrous, and for example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, and/or the like in a form of a metal powder or a metal fiber; a conductive polymer such as a polyphenylene derivative; and/or a (e.g., any suitable) mixture thereof.

The current collector may include a copper foil, a nickel foil, a stainless steel foil, a titanium foil, a nickel foam, a copper foam, a polymer substrate coated with a conductive metal, and/or a (e.g., any suitable) combination thereof.

### Preparation of negative electrode

The negative electrode and the negative electrode active material layer according to one or more embodiments may be prepared by the following procedures.

In one or more embodiments, the negative active material layer preparation method includes:
coating a negative electrode active material layer composition on a current collector, the negative electrode active material layer composition including
   a polymer whose volume or length is reduced at a set (e.g., predetermined) temperature,
   a negative electrode active material, and
   a solvent; and
drying it (e.g., the current collector with the negative electrode active material layer composition.) The solvent may be an organic solvent such as N-methyl pyrrolidone and/or water.

The drying may be carried out at about 20 °C to about 100 °C, but it is not limited thereto.

The dried product is pressurized to provide a pressurized product.

Thereafter, the pressurized product is vacuum-dried. The vacuum-drying may be carried out at a temperature of about 120 °C to about 200 °C, or may be carried out at about 150° C to about 200 °C, or about 180 °C to about 200 °C. The vacuum-drying may be carried out for about 8 hours to about 14 hours. The vacuum-drying may cause some of the polymer to be removed, thereby reducing the volume and/or the length of the polymer to form (e.g., provide) empty spaces within the negative electrode active material layer. For example, the polymer may be partially removed during the vacuum-drying.

### Rechargeable lithium battery

Another embodiment provides a rechargeable lithium battery including a negative electrode, a positive electrode, and an electrolyte.
The negative electrode may be the negative electrode according to one or more embodiments.

### Positive electrode

A positive electrode may include a current collector and a positive electrode active material layer on the current collector.

The positive electrode active material layer may include a positive electrode active material and may further include a binder and/or a conductive material (e.g., an electrically conductive material). For example, the positive electrode may further include an additive that may serve as a sacrificial positive electrode.

The positive electrode active material may include a compound (lithiated intercalation compound) that is capable of intercalating and deintercalating lithium. In one or more embodiments, at least one of a composite oxide of lithium and a metal selected from among cobalt, manganese, nickel, and combinations thereof may be used.

The composite oxide may be a lithium transition metal composite oxide, and examples of the composite oxide may include lithium nickel-based oxide, lithium cobalt-based oxide, lithium manganese-based oxide, lithium iron phosphate-based compound, cobalt-free nickel-manganese-based oxide, and/or a (e.g., any suitable) combination thereof.

As an example, the following compounds represented by any one selected from among the following Chemical Formulas may be used. LiₐA_{1-b}X_{b}O_{2-c}D_{c} (0.90≤a≤ 1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α} D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0 ≤b≤0.9, 0≤c≤0.5, 0≤d≤0.5, 0≤e≤0.1); LiₐNiG_{b}O₂ (0.90≤a≤1.8, 0.001 ≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001≤b≤ 0.1); LiₐMn₂G_{b}O₄ (0.90≤a≤1.8, 0.001≤b≤0.1); LiₐMn_{1-g}GgPO₄ (0.90≤a≤1.8, 0≤g≤ 0.5); Li_{(3-f)}Fe₂(PO₄)₃ (0≤f≤2); LiₐFePO₄ (0.90≤a≤1.8).

In the preceding Chemical Formulas, A is Ni, Co, Mn, and/or a (e.g., any suitable) combination thereof; X is Al, Ni, Co, Mn, Cr, Fe, Mg, Sr, V, a rare earth element and/or a (e.g., any suitable) combination thereof; D is O, F, S, P, and/or a (e.g., any suitable) combination thereof; G is Al, Cr, Mn, Fe, Mg, La, Ce, Sr, V, and/or a (e.g., any suitable) combination thereof; and L¹ is Mn, Al, and/or a (e.g., any suitable) combination thereof.

The positive electrode active material may be, for example, a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and may be applied to a high-capacity, high-density rechargeable lithium battery.

An amount of the positive electrode active material may be about 90 wt% to about 98 wt% based on 100 wt% of the positive electrode active material layer. Amounts of the binder and the conductive material may be about 1 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be used to impart conductivity (e.g., electrical conductivity) to the electrode, and any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, and/or the like, in a form of a metal powder or a metal fiber; a conductive polymer such as a polyphenylene derivative; and/or a (e.g., any suitable) mixture thereof.

Al may be used as the current collector, but the present disclosure is not limited thereto.

### Electrolyte

The electrolyte includes a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvents may be used alone or in combination of two or more.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), wherein x and y are integers of 1 to 20, lithium trifluoromethane sulfonate, lithium tetrafluoroether sulfonate, lithium difluorobis(oxalato)phosphate (LiDFOP), and lithium bis(oxalato) borate (LiBOB).

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both surfaces (e.g., opposite surfaces) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

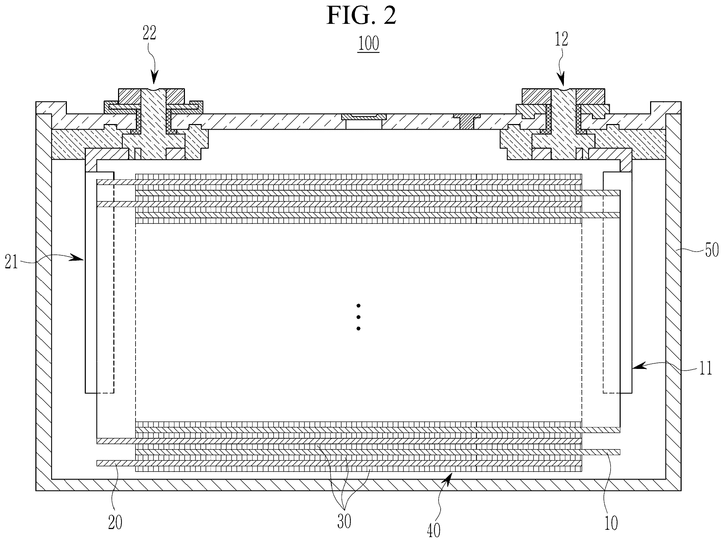

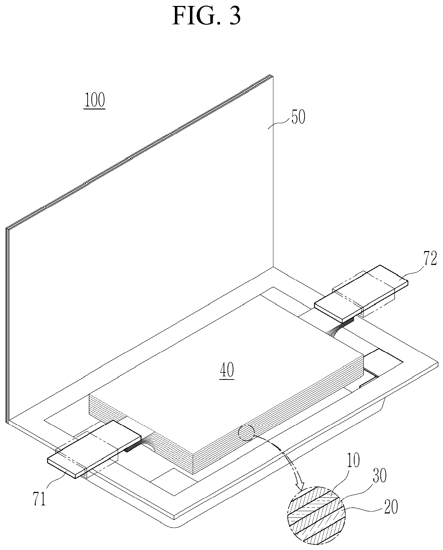

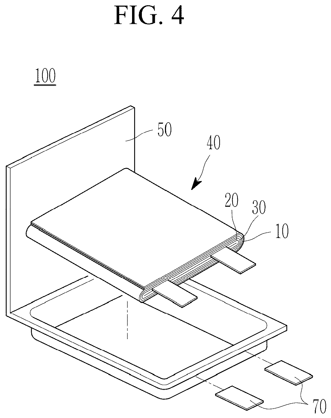

The rechargeable lithium battery may be classified into cylindrical, prismatic, pouch, or coin-type or kind batteries, and/or the like depending on their shape. FIG. 1 to FIG. 4 are schematic views each illustrating a rechargeable lithium battery according to one or more embodiments. FIG. 1 shows a cylindrical battery, FIG. 2 shows a prismatic battery, and FIG 3 and FIG. 4 show pouch-type or kind batteries. Referring to FIGs. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIG. 3, the rechargeable lithium battery 100 may include electrode tabs 70, which may be, for example, a positive electrode tab 71 and a negative electrode tab 72 serving as an electrical path for inducing the current formed in the electrode assembly 40 to the outside. As shown in FIG. 4, the rechargeable lithium battery 100 may include electrode tabs 70 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting example.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, examples of the present disclosure and comparative examples are described. These examples, however, are not in any sense to be interpreted as limiting the scope of present disclosure.

### EXAMPLES

### Example 1

0.5 wt% of a polyvinylchloride polymer, 5 wt% of a silicon-carbon composite negative electrode active material, 92 wt% of a negative electrode active material, 1.5 wt% of carboxymethyl cellulose, and 1 wt% of a styrene butadiene rubber were mixed in a water solvent to prepare a negative electrode active material layer slurry.

The polyvinylchloride polymer had a reduction rate of the volume at 180 °C relative to the volume at a room temperature (25 °C), represented by Equation 1 of 80 % and a reduction rate of the length at 180 ° relative to a length at a room temperature (25°C), represented by Equation 2 of 90 %. volume reduction rate (%) = [(volume at room temperature (25°C)-volume at 180 °C)/volume at a room temperature (25°C)]*100 Length reduction rate (%) = [(length at a room temperature (25°C)-length at 180 °C)/length at a room temperature (25°C)]*100

The silicon-carbon composite included an agglomerated product which was secondary particles where silicon nano particles with an average particle diameter of 100 nanometer (nm) were agglomerated, a soft carbon coating layer on the surface of the agglomerated product (e.g., a secondary particle), and based on the 100 wt% of the silicon-carbon composite, an amount of the silicon nano particles was 60 wt% and an amount of the soft carbon amorphous carbon was 40 wt%. The soft carbon coating layer had a thickness of 100 nm.

The negative electrode active material layer slurry was coated on a Cu foil current collector, dried, pressurized, and vacuum-dried at 180 °C for 8 hours to prepare a negative electrode in which the negative electrode active material layer was on the current collector.

The negative electrode, a lithium metal counter electrode, and an electrolyte were used to fabricate a half-cell according to the general procedures. The electrolyte was used by dissolving 1 M LiPF₆ in a mixed solvent of ethylene carbonate and dimethyl carbonate (3:7 volume ratio).

In the context of the present application and unless otherwise defined, the terms "use," "using," and "used" may be considered synonymous with the terms "utilize," "utilizing," and "utilized," respectively. Further, the use of "may" when describing embodiments of the present invention refers to "one or more embodiments of the present invention."

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments, but, on the contrary, is intended to cover one or more suitable modifications and equivalent arrangements included within the spirit and scope of the appended claims, and equivalents thereof.

## Claims

1. A negative electrode (20) comprising:
a current collector; and
a negative electrode active material layer on the current collector and comprising:
a polymer, the polymer whose volume or length is configured to decrease at a set temperature, and
a negative electrode active material,
wherein the negative electrode (20) is for a rechargeable lithium battery (100).

2. The negative electrode (20) as claimed in claim 1, wherein the set temperature is 120 °C to 200 °C.

3. The negative electrode (20) as claimed in claim 1 or 2, wherein the polymer has a reduction rate represented by Equation 1 of 70 % to 99 %, the reduction rate being a ratio of reduction in volume of the polymer at 120 °C to 200 °C relative to a volume of the polymer at room temperature: Reduction rate in volume (%) = [(volume at room temperature-volume at 120°C to 200 °C)/volume at room temperature]*100 and/or
a reduction rate represented by Equation 2 of 70 % to 99 %, the reduction rate being a ratio of reduction in length of the polymer at 120 °C to 200 °C relative to a length of the polymer at a room temperature. Reduction rate in length (%) = [(length at room temperature-length at 120°C to 200 °C)/length at room temperature]*100.

4. The negative electrode (20) as claimed in any of the claims 1 to 3, wherein the polymer is polyvinyl chloride.

5. The negative electrode (20) as claimed in any of the claims 1 to 4, wherein an amount of the polymer is 0.1 wt% to 1.0 wt% based on 100 wt% of the negative electrode active material layer.

6. The negative electrode (20) as claimed in any of the claims 1 to 5, wherein a weight ratio of the negative electrode active material and the polymer is 99.9:0.1 to 99.0:1.0 by a weight ratio.

7. The negative electrode (20) as claimed in any of the claims 1 to 6, wherein the negative electrode active material layer has a porosity of 20 % to 30 %.

8. The negative electrode (20) as claimed in any of the claims 1 to 7, wherein the negative electrode active material comprises a carbon-based negative electrode active material, a Si-based negative electrode active material, or a combination thereof, wherein preferably the carbon-based material comprises crystalline carbon, amorphous carbon, or a combination thereof; and/or the Si-based negative electrode active material preferably comprises
silicon,
a silicon-carbon composite,
SiOₓ(0<x≤2),
a Si-Q alloy, Q comprises an alkali metal, an alkaline-earth metal, a Group 13 element, a Group 14 element (excluding Si), a Group 15 element, a Group 16 element, a transition metal, a rare earth element, or a combination thereof, or
a combination thereof.

9. The negative electrode (20) as claimed in any of the claims 1 to 8, wherein the negative electrode active material layer further comprises a binder and/or a conductive material.

10. The negative electrode (20) as claimed in any of the claims 1 to 9,
wherein the negative electrode active material layer is prepared by
coating a negative electrode active layer composition on the current collector,
the negative electrode active layer composition comprising:
the polymer whose volume or length is configured to decrease at the set temperature,
the negative electrode active material, and
a solvent;
drying the current collector with the negative electrode active material layer composition to provide a dried product;
pressurizing the dried product to provide a pressurized product; and
vacuum-drying the pressurized product.

11. The negative electrode (20) as claimed in any of the claims 1 to 10, wherein the vacuum-drying is carried out at 120 °C to 200 °C.

12. The negative electrode (20) as claimed in any of the claims 1 to 11, wherein the negative electrode active material layer has empty spaces.

13. A method of preparing a negative electrode active material layer, the method comprising:
coating a negative electrode active layer composition on a current collector, the composition comprising
a polymer whose volume or length is reduced at a set temperature,
a negative electrode active material, and
a solvent;
drying the current collector with the negative electrode active material layer composition to provide a dried product;
pressurizing the dried product to provide a pressurized product; and
vacuum-drying the pressurized product.

14. The method as claimed in claim 13, wherein the vacuum-drying is carried out at 120 °C to 200 °C and/or provides empty spaces in the negative electrode active material layer.

15. A rechargeable lithium battery (100), comprising:
the negative electrode (20) as claimed in any one of claim 1 to claim 12;
a positive electrode (10); and
an electrolyte.
